Europäisches Patentamt

European Patent Office

Office européen des brevets

(19)

(11) Publication number: **0 101 783**
**B1**

(12) **EUROPEAN PATENT SPECIFICATION**

(45) Date of publication of patent specification: **08.07.87**

(21) Application number: **83101398.2**

(22) Date of filing: **14.02.83**

(51) Int. Cl.⁴: **F 16 B 39/286**

(54) **Double lock nut assembly.**

(30) Priority: **31.08.82 JP 149998/82**

(43) Date of publication of application:
**07.03.84 Bulletin 84/10**

(45) Publication of the grant of the patent:
**08.07.87 Bulletin 87/28**

(84) Designated Contracting States:
**DE FR GB IT**

(56) References cited:
**AT-B- 252 663**
**CH-A- 215 726**
**DE-C- 235 716**
**FR-A- 482 067**
**FR-E- 37 046**
**US-A-1 351 676**
**US-A-2 394 812**

(73) Proprietor: **IWATA BOLT KOGYO KABUSHIKI**
**KAISHA**
**3-4, 5-Chome, Nishigotanda**
**Shinagawa-Ku Tokyo-To (JP)**

(72) Inventor: **Yamamoto, Akira**
**664-387, Hatoyama-Machi**
**Hiki-Gun Saitama-Ken (JP)**

(74) Representative: **Solf, Alexander, Dr. et al**
**Dr. Solf & Zapf Zeppelinstrasse 53**
**D-8000 München 80 (DE)**

Courier Press, Leamington Spa, England.

## Description

The invention relates to a double lock nut assembly for preventing loosening, comprising a bolt passed through a mechanical member so that its end part projects beyond a surface of the member, a main nut screwed on said end part and tightened against said surface, and an auxiliary nut screwed on said end part and tightened against the surface of the main nut remote from the surface of said member, said main nut being made up of a body portion contacting the surface of the mechanical member and having female threads bearing the axial bolting force, a locking portion contacting the auxiliary nut and having female threads, and at least one joint portion having a rigid support and a joint extending between the body portion and the locking portion and connecting the body portion and the locking portion with a predetermined clearance therebetween, said joint portion being disposed locally of the body portion and the locking portion so that the tightened auxiliary nut causes the locking portion to be displaced toward the body portion in such a manner that the female threads of the locking portion bear the locking force.

As is well known, a conventional double lock nut assembly comprises a first nut and a second nut both of which include female screw threads and are screwed on a tightening bolt one upon the other. The bolt is inserted through a mechanical member to be bolted and the first nut is screwed on the projected part of the bolt and tightened against the surface of the mechanical member. In this tightened state, the first nut bears the axial bolting or tightening force due to pressed contact between the flanks, facing the mechanical member, of the male screw threads of the bolt and the surfaces, facing in the direction away from the mechanical member, of the female threads of the first nut. The second nut is then screwed on the remaining projected part of the bolt, and after the second nut abuts against the first nut, the former is tightened. As the second nut is tightened further with an increased torque, the surfaces, facing in the direction away from the mechanical member, of the female threads of the first nut is gradually moved relatively away from the flanks, facing the mechanical member, of the male threads of the bolt. Thereafter, the surfaces, facing the mechanical member, of the female threads of the first nut is brought into pressed contact with the flanks, facing in the direction away from the mechanical member, of the male threads of the bolt, and an intended locking force is generated due to the above-stated pressed contact therebetween, while the second nut bears the axial bolting force.

In the conventional double lock nut assembly of the above construction, the torque to be applied to the second nut must be great enough to exceed the torque applied to the first nut to generate the axial bolting or tightening force in order that a required locking effect is achieved. As will be described hereinafter in detail, this tends to cause both the first and second nuts to rotate together during tightening operation, and, in order to prevent such undesired rotation, two spanners must usually be used in such a manner that one of them is engaged with the first nut and the other with the second nut. Moreover, judgement as to whether a required tightening torque is applied is difficult and therefore, the correct locking force cannot always be obtained.

In the US—A—1 351 676 a lock nut assembly is described. The main nut disclosed in the US Patent has a plurality of slits cut in axially spaced-apart positions to form gripping tongues as well as projections formed on the upper and lower surfaces of the nut. When the auxiliary nut superposed on the main nut is tightened against the main nut, the upper projection is pressed downwards while the lower projection is kept in abutment with the surface of the member to be bolted, whereby the main nut is caused to incline relative to the longitudinal axis of the bolt and, as a result the tongues bind against the bolt and grip the same at diametrically opposite points.

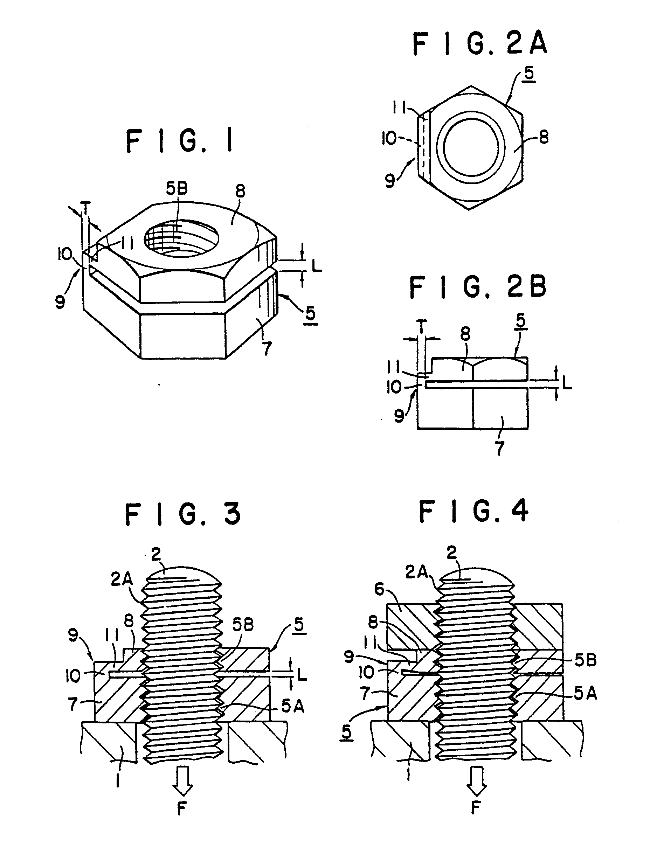

It is to be noted that because the slits are formed only halfway with respect to the diagonal direction of the nut, the upper and lower nut portions divided by each slit are connected rigidly through a portion of great cross-sectional area and therefore there is no resiliently deformable local joint portion between the upper and lower nut portions as will be clearly appreciable from Figs. 2 and 3. It will be understood that with such a construction the gripping tongues would not be able to bind against the bolt without the provision of the pair of projections which cause the nut to incline relative to the bolt upon the tightening of the auxiliary nut.

It will also be understood that the forced inclination of the main nut causes undue stresses mainly in the neighborhood of the lower projection, resulting in breakdown due to fatigue and in damage of the member contacting the lower projection. Moreover, the projection makes the locking nut assembly unstable.

Further, because of the formation of a number of slits, the lowest relatively thin tongue must mainly bear the axial bolting force, so that the main nut does not have sufficient strength to withstand the bolting force.

The present invention is intended to update above-described drawbacks with respect to the conventional double lock nut assembly and to make it possible to carry out the tightening operation accurately with reduced torque using a single spanner and to determine the optimum locking torque easily.

In contrast to the foregoing, the main nut used in this invention has no such protruding parts as the projections in the prior art and has only one slit which defines the lower body portion occupying a major part of the axial length of nut and the upper locking portion occupying a minor part of the same, the slit also defining a resiliently deformable joint portion disposed locally of the nut with respect to the circumferential direction of the nut, whereby the nut is stable and has sufficient strength to withstand the axial bolting force.

According to the present invention the joint is a resilient part of reduced thickness formed by recessing the surface of the locking portion, facing the auxiliary nut, locally and adjacent to the support.

In the double lock nut assembly of the invention, the auxiliary nut serves merely for resiliently displacing the locking portions of the main nut until the required locking effect is achieved and does not participate in bearing the axial bolting force.

In a preferred embodiment of the invention, a rigid support and the joint are integral with the body portion and the locking portion.

To facilitate the manufacturing, the body portion and the locking portion of the main nut may be prepared separately and then connected by a weld forming the support.

Other objects, features and advantages of the present invention will become apparent from the reading of the following description made in conjunction with the accompanying drawings.

In the drawings:

Fig. 1 is a perspective view of a main nut of a double lock nut assembly in accordance with an embodiment of the invention;

Fig. 2A is a plan view of the main nut in Fig. 1;

Fig. 2B is a front view of the same;

Fig. 3 is a view, in longitudinal section, illustrating the main nut screwed on the projected part of a bolt which is inserted through a drilled hole of a mechanical member to be bolted;

Fig. 4 is a view, in longitudinal section, illustrating an example of the double lock nut assembly of the invention, wherein an auxiliary nut is screwed on the projected part of the bolt and it is then tightened until a required locking effect is obtained;

Fig. 5A is a plan view of a modified main nut of the double lock nut assembly in accordance with the invention;

Fig. 5B is a front view of the same;

Fig. 6A is a plan view of another modified main nut of the double lock nut assembly in accordance with the invention;

Fig. 6B is a front view of the same;

Fig. 7A is a plan view of a further modified main nut of the double lock nut assembly in accordance with the invention;

Fig. 7B is a front view of the same;

Fig. 8 is a view, in longitudinal section, illustrating a condition in which a first nut of a conventional double lock nut assembly is screwed on the projected part of a bolt which is inserted through a drilled hole of a mechanical member to be bolted; and

Fig. 9 is a view, in longitudinal section, of the conventional double lock nut assembly, illustrating a condition in which a second nut is screwed on the projected part of the bolt and it is then tightened until a required locking effect is obtained in cooperation with the first nut in Fig. 8.

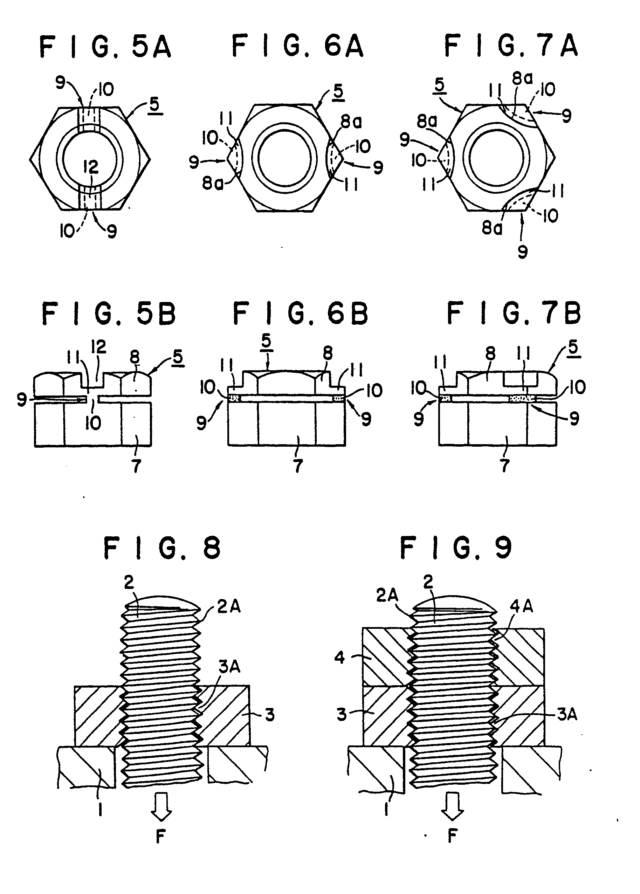

As conducive to a full understanding of the nature and utility of the present invention, a brief consideration of a typical conventional double lock nut assembly will be first presented below with reference to Figs. 8 and 9 principally for the purpose of comparison therebetween.

As is apparent from Fig. 9, the conventional double lock nut assembly comprises a first nut 3 and a second nut 4. The shank of a bolt 2, the head of which is nut shown in the drawings, is first inserted through a drilled hole of a mechanical member 1 intended to be tightly held by a combination of the bolt 2 and the nuts 3 and 4. The first nut 3 is then screwed on the projected part of the bolt 2, and after the bottom surface of the first nut 3 is brought into abutment against the surface of the mechanical member 1, the nut 3 is tightened to produce an axial bolting force F. Next, the second nut 4 is screwed on the remaining projected part of the bolt 2 and thereafter tightening is effected in the same manner as in the case of the first nut 3.

In the first tightened state as illustrated in Fig. 8, the lower flanks (as viewed in the figure) of the male threads 2A of the bolt 2 are brought in close contact with the upper surfaces of the female threads 3A of the first nut 3 so that the axial bolting force F required for the intended tightening is borne by the first nut 3.

In the second tightened state as illustrated in Fig. 9, an intended correct locking is achieved by screwing the second nut 4 with a specific torque. In the illustrated state, the lower flanks of the male threads 2A of the bolt 2 are brought in close contact with the upper surfaces of the female threads 4A of the second nut 4 so that the axial bolting force F is borne not by the first nut 3 but by the second nut 4. On the other hand, the upper surfaces of the female threads 3A of the first nut 3 are spaced away from the lower flanks of the male threads 2A of the bolt 2, while the lower surfaces of the female threads 3A of the first nut 3 are brought in pressed contact with the upper flanks of the male threads 2A of the bolt 2. The thrust force generated by the pressed contact therebetween serves as a locking force for preventing the double lock nut assembly from being loosened and unscrewed.

As will be readily understood from the above description, the intended locking effect for preventing loosening and unscrewing of the double lock nut assembly is obtained only when the tightened state as illustrated in Fig. 9 is achieved. In other words, sufficient locking effect cannot be obtained when the lower surfaces of the female threads 3A of the first nut 3 are not brought in contact with the upper flanks of the male threads 2A of the bolt 2 and when the aforesaid locking force is not generated fully.

In order to obtain the above state in which sufficient locking effect is achieved by means of the second nut 4, the torque to be applied to the second nut 4 must be in excess of the torque required for generating the axial bolting force F on the bolt 2. Further, due to the fact that the above torque to the second nut 4 is in excess of the torque applied to the first nut 3 to screw the latter, the workman is required to operate both the nuts 3 and 4 separately using two spanners, in order to prevent them from rotating together, in such a manner that one of the spanners engages with the first nut 3 and the other with the second nut 4 and the spanners are oriented in an angular disposition.

The conventional double lock nut assembly thus requires a troublesome tightening operation with excessively high torque to be applied by means of two spanners in the above-described manner. Moreover, judgement as to whether the required locking torque is reached by the operation is difficult with the conventional double lock nut assembly. For these reasons, the conventional double lock nut assembly tends to be inadequate and unreliable in its locking effect.

Hence, the present invention is intended to obviate the drawbacks inherent to the conventional double lock nut assembly as described above.

Figs. 1 to 4 illustrate a preferred form of the double lock nut assembly in accordance with the invention. The double lock nut assembly of the invention comprises essentially a main nut 5 serving as a first nut and an auxiliary nut 6 serving as a second nut. A commercially available ordinary or standard nut can be used for the auxiliary nut 6.

As can be best seen in Fig. 1, the main nut 5 is made up of a body portion 7 having female threads 5A (Fig. 3) adapted to bear the axial bolting force, and a locking portion 8 having female threads 5B adapted to bear the locking force, and both the portions 7 and 8 are connected integrally by way of a joint portion 9 disposed on one side of the hexagonal configuration of the main nut 5.

The joint portion 9 comprises a rigid support 10 disposed between the two portions 7 and 8 and serving to provide a predetermined clearance L between the upper surface (as viewed in the figures) of the body portion 7 and the lower surface of the locking portion 8, and a resilient joint 11 having a reduced thickness, said resilient joint 11 being formed by cutting off a part of the locking portion 8 to provide a recessed surface thereon at a position corresponding to said support 10, the recessed surface extending in a plane parallel to the upper surface of the portion 8 by a distance greater than the thickness T of the support 10.

When the double lock nut assembly is to be formed, a bolt 2 is inserted, as shown in Fig. 3, through a drilled hole of a mechanical member 1, and the main nut 5 is screwed on the projected part of the bolt 2 and tightened to a degree to obtain a required axial bolting force F. In this tightened state, the lower flanks (as viewed in the figure) of the male threads 2A of the bolt 2 are brought in ·pressed contact with the upper surfaces of the female threads 5A of the body portion 7 of the main nut 5 so that the axial tightening force F is borne by means of the main nut. It should be noted that the female threads 5B of the locking portion 8 of the main nut 5 have a very small capability of bearing the axial tightening force because of the existence of the resilient joint 11.

Next, the auxiliary nut 6 is screwed on the remaining projected part of the bolt 2 and after the lower surface of the auxiliary nut 6 abuts against the upper surface of the locking portion 8 of the main nut 5, the auxiliary nut 6 is tightened whereby the resilient joint 11 is deformed as illustrated in Fig. 4, causing the upper surfaces of the female threads 5B of the locking portion 8 of the main nut 5 to be moved away from the lower flanks of the male threads 2A of the bolt 2. As the auxiliary nut 6 is tightened further, the lower surfaces of the female threads 5B of the locking portion 8 are brought in pressed contact with the upper flanks of the male threads 2A of the bolt 2. A thrust force is generated by the above pressed contact and therefore the main nut 5 becomes self-locked, resulting in effective prevention of loosening and unscrewing.

It is to be noted that the above thrust force, that is, a locking force can be released only by rotating the auxiliary nut 6 in the opposite direction.

Figs. 5A to 7B illustrate three modified embodiments of the invention particularly with respect to the main nut 5.

The main nut 5 shown in Figs. 5A and 5B is modified from the preceding embodiment in that two joint portions 9 are arranged at diametrically opposite side parts of the main nut 5 in a symmetrical relation with respect to the center axis of the nut 5. More specifically, each of the joint portions 9 includes a support 10 and a groove 12 which extend in a radial direction of the nut 5. The thickness of the support 10 in a direction transverse to the radial direction is less than the width of groove 12. The groove 12 is formed in the upper surface of the nut 5 and disposed above the support 10. As in the preceding embodiment, the body portion 7 and the locking portion 8 are connected integrally to one another by way of the supports 10.

In the main nut 5 shown in Figs. 6A and 6B, two joint portions 9 are arranged at diagonally opposite corner parts of the main nut 5 in a symmetrical relation with respect to the center axis of the nut 5. Each of the joint portions 9 includes a support 10 interposed between the two portions 7 and 8, and an arcuate shoulder 8a forming a recessed surface above the support 10. Again, the thickness of the support 10 is less than the width of the recessed surface. The arcuate shoulders 8a are formed by cutting off the upper parts of the corners of the locking portion 8 in the form of a sector. In this embodiment, the supports 10 are not integral parts of the portions 7 and 8 but welds connecting the separate portions 7 and 8.

In the main nut 5 shown in Figs. 7A and 7B, three joint portions 9 are disposed at every other corners of the hexagonal configuration of the main nut 5. The joint portions 9 are designed and constructed in the same manner as those in Figs.

6A and 6B.

The double lock nut assembly employing the modified main nuts as illustrated in Figs. 5A to 7B is formed in the same manner as that described with reference to Figs. 1 to 4, that is by screwing and tightening the main nut 5 and then screwing and tightening the auxiliary nut 6 until a required locking force is generated by pressed contact between the lower surfaces of the female threads 5B of the locking portion 8 and the upper flanks of the male threads 2A of the bolt 2, caused by deformation of the resilient joint 11 of the locking portion 8.

In the first embodiment of the invention as illustrated in Figs. 1 to 5, the main nut 5 is prepared by cutting into a nut blank a slit having a clearance L so as to leave the support 10 integrally connecting the body portion 7 and the locking portion 8. Alternatively, the main nut 5 may be prepared by welding separately manufactured portions 7 and 8 at the position corresponding to the support 10. In the case where the supports 10 are formed of welds, the female threads in the main nut 5 are preferably machined after completion of the welding.

As will be readily understood from the above description, the torque to be applied to the auxiliary nut of the double lock nut assembly of the invention is determined independently of the torque required for generating the axial bolting force F, and it can be as large as a sum of a small torque required for deforming the resilient joint 11 and a relatively small torque required for generating a thrust force for the pressed contact between the lower surfaces of the female threads 5B (i.e., the female thread surfaces facing the mechanical member to be bolted) of the locking portion 8 and the upper flanks of the male threads 2A of the bolt 2 (i.e., the male thread flanks facing in the direction away from the mechanical member to be bolted), whereas the torque to be applied to the second nut of the conventional double lock nut assembly must be so great as to be in excess of the torque required for generating the axial bolting force F. Accordingly, in the assembly according to the present invention, the torque to be applied to the auxiliary nut is much smaller than the torque to be applied to the second nut of the conventional assembly. Further, it is easy and simple to control the optimum required torque using a torque limiting wrench or the like so as to obtain a correctly locked state.

Further, due to the fact that the torque to be applied to the auxiliary nut in the present invention is much smaller than the torque to be applied to the main nut of the conventional double lock nut assembly, there is no possibility that the main nut is rotated together with the auxiliary nut during the tightening operation of the latter. Therefore, the conventional tightening operation using two spanners is not required any longer and only a single spanner is necessary to rotate the auxiliary nut for tightening, which makes it possible to carry out the tightening operation easily.

According to the present invention, the auxiliary nut can be dimensioned merely for generating a thrust force due to the above pressed contact, so that a standard regular nut or a commercially available nut having less axial thickness can be employed therefor, whereas the second nut of the conventional double lock nut assembly must be dimensioned thicker than the standard nut, because there is the necessity for the second nut to bear the axial bolting force F required for bolting a mechanical member in addition to the locking force. As a result the double lock nut assembly of the invention is economical.

**Claims**

1. A double lock nut assembly for preventing loosening, comprising a bolt (2) passed through a mechanical member (1) so that its end part projects beyond a surface of the member, a main nut (5) screwed on said end part and tightened against said surface, and an auxiliary nut (6) screwed on said end part and tightened against the surface of the main nut remote from the surface of said member, said main nut (5) being made up of a body portion (7) contacting the surface of the mechanical member (1) and having female threads (5A) bearing the axial bolting force, a locking portion (8) contacting the auxiliary nut (6) and having female threads (5B), and at least one joint portion (9) having a rigid support (10) and a joint (11) extending between the body portion (7) and the locking portion (8) and connecting the body portion and the locking portion with a predetermined clearance (L) therebetween, said joint portion (9) being disposed locally of the body portion and the locking portion so that the tightened auxiliary nut (6) causes the locking portion (8) to be displaced toward the body portion (7) in such a manner that the female threads (5B) of the locking portion bear the locking force, characterized in that the joint (11) is a resilient part of reduced thickness formed by recessing the surface of the locking portion (8), facing the auxiliary nut (6), locally and adjacent to the support (10).

2. A double lock nut assembly according to claim 1 wherein the rigid support (10) and the joint (11) are integral with the body portion (7) and the locking portion (8).

3. A double lock nut assembly according to claim 1 wherein the rigid support (10) is a weld interposed between the body portion (7) and the locking portion (8).

4. A double lock nut assembly according to claim 1 wherein said part of reduced thickness extends beyond the cross-sectional area of the rigid support (10).

5. A double lock nut assembly according to claim 1 wherein the joint portion (9) is provided at least at one corner of the main nut.

6. A double lock nut assembly according to claim 1 wherein the joint portion (9) is provided along a radius of the main nut.

## Patentansprüche

1. Doppel-Sicherungsmutter-Satz zum Verhindern des Lösens, bestehend aus einem derart durch ein mechanisches Teil (1) geführten Schraubbolzen (2), daß dessen Endbereich eine Oberfläche des Teils überragt, einer auf den Endbereich aufgeschraubten und gegen die Oberfläche festgezogenen Hauptmutter (5) sowie einer auf den Endbereich aufgeschraubten und gegen die der Oberfläche des Teils (1) abgekehrte Oberfläche der Hauptmutter festgezogenen Hilfsmutter (6), wobei die Hauptmutter (5) aus einem die Oberfläche des mechanischen Teils (1) berührenden Hauptteil (7) mit einem Innengewinde (5A) zur Aufnahme der axialen Bolzenverschraubungskraft, aus einem die Hilfsmutter (6) berührenden Sicherungsteil (8) mit einem Innengewinde (5B) sowie aus mindestens einem Verbindungsabschnitt (9) mit einem starren Sockel (10) und einem sich zwischen dem Hauptteil (7) und dem Sicherungsteil (8) erstreckenden und den Hauptteil mit dem Sicherungsteil über einen bestimmten, zwischenliegenden Abstand (L) verbindenden Verbindungssteg (11) besteht, wobei der Verbindungsabschnitt (9) nahe des Hauptteils und des Sicherungsteils angeordnet ist, so daß die festgezogene Hilfsmutter (6) den Sicherungsteil (8) derart in Richtung des Hauptteiles (7) drängt, daß das Innengewinde (5B) des Sicherungsteiles die Sicherungskraft aufnimmt, dadurch gekennzeichnet, daß der Verbindungssteg (11) als elastisches Teil mit verminderter Dicke durch einen Absatz der der Hilfsmutter (6) zugekehrten Oberfläche des Sicherungsteils (8) gebildet und in der Nähe des Sockels (10) an diesen angrenzend angeordnet ist.

2. Doppel-Sicherungsmutter-Satz nach Anspruch 1, dadurch gekennzeichnet, daß der starre Sockel (10) und der Verbindungssteg (11) einstückig mit dem Hauptteil (7) und dem Sicherungsteil (8) ausgebildet sind.

3. Doppel-Sicherungsmutter-Satz nach Anspruch 1, dadurch gekennzeichnet, daß der starre Sockel (10) eine zwischen dem Hauptteil (7) und dem Sicherungsteil (8) angeordnete Schweißstelle ist.

4. Doppel-Sicherungsmutter-Satz nach Anspruch 1, dadurch gekennzeichnet, daß sich das Teil mit verminderter Dicke bis über den Querschnittsbereich des starren Sockels (10) hinaus erstreckt.

5. Doppel-Sicherungsmutter-Satz nach Anspruch 1, dadurch gekennzeichnet, daß der Verbindungsabschnitt (9) an mindestens einer Ecke der Hauptmutter angeordnet ist.

6. Doppel-Sicherungsmutter-Satz nach Anspruch 1, dadurch gekennzeichnet, daß der Verbindungsabschnitt (9) längs eines Radius der Hauptmutter angeordnet ist.

## Revendications

1. Ensemble bloqué à deux écrous destiné à empêcher le desserrage, comprenant une vis (2) enfilée à travers un élément mécanique (1) de manière que sa partie d'extrémité déborde au-delà d'une surface de l'élément, un écrou principal (5) vissé sur ladite partie d'extrémité et serré contre ladite surface, et un écrou auxiliaire (6) vissé sur ladite partie d'extrémité et serré contre la surface de l'écrou principal qui est éloignée de la surface dudit élément, ledit écrou principal (5) étant composé d'une partie corps (7) en contact avec la surface de l'élément mécanique (1) et possédant des filets femelles (5A) qui supportent la force axiale de vissage, une partie de blocage (8) qui est en contact avec l'écrou auxiliaire (6) et possède des filets femelles (5B), et au moins une partie joint (9) qui comprend un support rigide (10) et un joint (11) et qui s'étend entre la partie corps (7) et la partie de blocage (8) et relie la partie corps à la partie de blocage en laissant un dégagement prédéterminé (L) entre ces parties, ladite partie joint (9) étant disposée dans une zone locale limitée de la partie corps et de la partie de blocage, de sorte que l'écrou auxiliaire (6) serré contraint la partie de blocage (8) à se rapprocher de la partie corps (7) de telle manière que les filets femelles (5B) de la partie de blocage supportent la force de blocage, caractérisé en ce que le joint (11) est une partie élastique d'épaisseur réduite formée en évidant la surface de la partie de blocage (8), qui regarde l'écrou auxiliaire (6), localement limitée et adjacente au support (10).

2. Ensemble bloqué à deux écrous selon la revendication 1, dans lequel le support rigide (10) et le joint (11) sont d'une seule pièce avec la partie corps (7) et avec la partie de blocage (8).

3. Ensemble bloqué à deux écrous selon la revendication 1, dans lequel le support rigide (10) est une soudure interposée entre la partie corps (7) et la partie de blocage (8).

4. Ensemble bloqué à deux écrous selon la revendication 1, dans lequel ladite partie d'épaisseur réduite se prolonge au-delà de la surface de la section du support rigide (10).

5. Ensemble bloqué à deux écrous selon la revendication 1, dans lequel la partie joint (9) est prévue au moins à un angle de l'écrou principal.

6. Ensemble bloqué à deux écrous selon la revendication 1, dans lequel la partie joint (9) est prévue le long d'un rayon de l'écrou principal.

F I G. I

F I G. 2A

F I G. 2B

F I G. 3

F I G. 4

0 101 783

FIG. 5A    FIG. 6A    FIG. 7A

FIG. 5B    FIG. 6B    FIG. 7B

FIG. 8    FIG. 9

2